# EUROPEAN PATENT APPLICATION

(11) **EP 0 878 380 A2**
(43) Date of publication of application: **18.11.1998**
(21) Application number: 98850054.2
(22) Date of filing: 09.04.1998
(51) Int. Cl.: B62D 33/02, B60P 1/28

(54) **Platform**

(30) Priority: 16.05.1997 SE 9701827
(71) Applicant: ASFALTTEKNIK I GÄLLÖ AB, 840 50 Gällö (SE)
(72) Inventor: Bengtsson, Karl-Arne, 830 10 Underaker (SE)
(74) Representative: Bjerre, Nils B.J.

(57) **Abstract**

The invention relates to a double-walled platform comprising a double-walled lower part (3) which is fill-able with a load, a cover part (5) covering the lower part, and a supporting frame connected with the lower part. The lower part comprises an inner wall (7) and an outer wall (9) connected with the inner wall and the frame. Stationary air is enclosed between the outer wall and the inner wall. The inner wall comprises a channel-shaped curved main portion (11) and front and rear end wall portions (25, 27) connected with the main portion. Supporting portions (34) of the frame are connected with the main portion and support the same. The outer wall comprises a plastic layer (17).

## Description

### Field of the Invention

The present invention relates to a double-walled platform according to the preamble to claim 1 of the appended claims.

### Background Art

Double-walled platforms have double walls for the purpose of insulation. Hot materials, such as asphalt compounds for roads, are often transported long distances, between the supplier's depot and the place where the material is to be used. Single-walled platforms cause undesired cooling of the material during transportation.

GB-2,058,178 discloses a known double-walled platform having an outer wall and an inner wall. In the space between the walls, or the shells, reinforcing members are arranged, which are connected with both walls and define closed compartments between themselves. The walls are box-shaped, and the entire platform is made of steel. The compartments are filled with insulating material, such as glass wool.

This platform certainly has an insulating effect but does not function very well. The reinforcing members are highly thermally conductive and create cooling zones in the transported material. The insulating material causes certain problems in the final welding operation, which closes the space between the walls. Besides there is a risk of condensation on the inside of the outer steel wall.

### Summary of the Invention

An object of the invention is to provide a double-walled platform which has good insulating power and obviates the above-mentioned problems of the known platform.

The object is achieved by a double-walled platform according to claim 1 of the appended claims. The preamble to claim 1 is based on GB-2,058,178.

The curved inner wall obviates the problem with cooling zones. The curved shape yields sufficient strength for the load to be carried, supported merely by the supporting portions of the frame. The supporting portions have such a small total surface engaging the inner wall and such a small surface exposed to the ambient air that the cooling effect is negligible. The plastic layer of the outer wall has two functions. It provides extra insulation in addition to the insulation of the stationary air. As a result, it is not necessary, although quite possible within the scope of the invention, to fill the space between the walls with insulating material. Besides the plastic layer significantly reduces the risk of condensation arising on the inside of the outer wall, as is the case with the prior-art platform.

An embodiment as defined in claim 2 has extra good insulation since the aluminium layer reflects thermal radiation from the inner wall.

### Brief Description of the Drawing

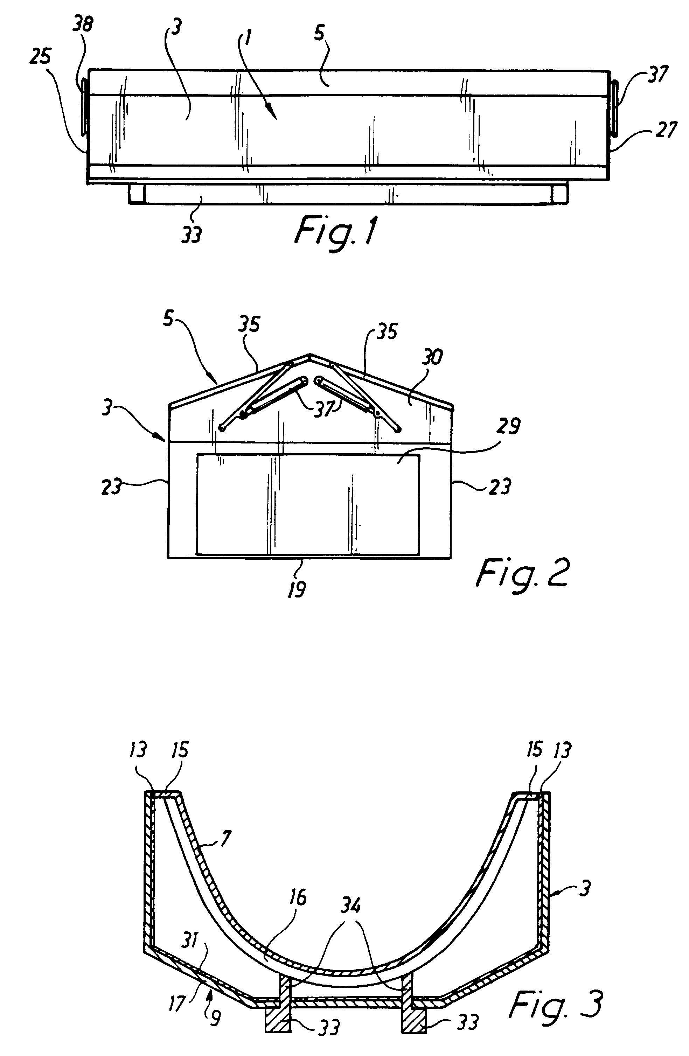

The invention and further advantages thereof will now be described in more detail by way of embodiments and with reference to the accompanying drawing, in which
Fig. 1 is a side view of a platform according to an embodiment of the present invention;
Fig. 2 is a rear view of the platform in Fig. 1; and
Fig. 3 is a cross-sectional view of the platform in Fig. 1.

### Description of the Embodiments

The Figures illustrate a platform 1 according to a preferred embodiment of the invention. The platform 1 has a double-walled lower part 3 for receiving a load and a two-piece cover part 5 which covers the lower part 3 so as to form a closed load space. The lower part 3 has an inner wall 7 and an outer wall 9. Moreover the platform 1 has a supporting frame with two longitudinal frame elements 33, which support the lower part 3 and the cover part 5, and two transverse frame elements 32 connecting the same at their ends.

The inner wall 7 is made of steel sheet and has a channel-shaped, preferably essentially semi-cylindrical main portion 11; a front end wall portion 25 and a rear end wall portion 27 which are connected with the front and rear terminal edges, respectively, of the main portion 11 and with strip-shaped edge portions 15 connected with the lateral edges of the main portion 11 and the end wall portions 25, 27, respectively. The edge portions 15 extend on a level with each other along the main portion 11 and the end wall portion 25. For practical reasons, however, the edge portions 15 are arranged somewhat lower along the end wall portion 27, just above a door 29.

The curved shape of the main portion 11 yields, in coaction with the edge portions 15 and the end wall portions 25, 27, a very rigid and strong structure. With a sufficient thickness of the steel sheet, it will be self-supporting. For reasons of cost, it is, however, desirable to use fairly thin steel sheet. Therefore the inner wall also comprises elongate, circumferentially extending reinforcing members 16. These thus follow the main portion 11 from one edge portion 15 to the other, are fixed to the main portion 11 and are spaced from each other in the longitudinal direction of the platform 1.

The curved surface of the main portion 11, on which the load rests, also obviates another problem that exists in the prior-art platform. Some of the material does not fall off the known platform during emptying, but gets stuck in the sharp joints between bottom and sides. The curved surface of the inner wall 7, however, has excellent releasability.

The outer wall 9 is essentially box-shaped and has a horizontal central bottom portion 19, which is arranged between the longitudinal frame elements 33; two lateral bottom portions 21, which for the most part are slightly inclined and in their lower longitudinal lateral edges are connected each with one of the frame elements 33 and which are angled upwards seen from the central bottom portion 21; and two vertical lateral portions 23 which in their lower longitudinal lateral edges are connected with the upper longitudinal lateral edges of the lateral bottom portions 21. The upper longitudinal lateral edges 13 of the lateral portions 23 are connected with the longitudinal lateral edges of the inner wall 7, i.e. the edge portions 15. The outer wall 9 is arranged so as to create a distance between the walls 7 and 9. The edge portions 15 contribute thereto, as do vertical supporting portions 34 of the frame elements 33. The supporting portions 34 can, in the preferred embodiment as illustrated, be said to be pieces of flat iron which are arranged on edge and which are narrower than the rest of the frame elements 33. The supporting portions 34 are connected with the reinforcing members 16.

The connections of the outer wall with the inner wall 7 and the frame elements 33 are so tight that the space between the walls can be said to be filled with stationary air. The space is preferably filled only with air as insulating medium, but can also be provided with an insulating material.

The outer wall 9 comprises a plastic layer 17, which is made up of plastic panels, preferably double-walled panels. The plastic layer 17 forms a temperature bridge, or temperature gradient, which prevents cold surroundings from causing condensation problems on the inside of the outer wall 9 facing the space. The plastic panels 17 are interconnected in some suitable manner which is obvious to those skilled in the art, for instance, by gluing. A supporting body, e.g. of light metal, which is fixed to the frame and, possibly, to the inner wall 7 and which holds the panels can be arranged.

In the shown embodiment, the outer wall 9 further comprises a thin reflective layer 31, which reflects thermal radiation and which is arranged on the side of the plastic layer 17 facing the space. As a result, an additionally improved insulating power is achieved by the fact that thermal radiation from the inner wall 7 is reflected back. The reflective layer 31 is here a reflective colour which is painted on the plastic panels 17. Other alternatives, such as a film, are also conceivable.

The rear end wall portion 27 comprises a rectangular door 29, which in a closed state engages the arcuate rear terminal edge of the inner wall 7. The load is emptied through the door 29. The rear end wall portion 27 is covered with a portion 30 of the outer wall 9. Also the front end wall portion 25 is fully covered with a portion of the outer wall 9.

The cover part 5 comprises two covers 35, which advantageously are made of double-walled plastic. The covers 35 are openable, and hydraulic assemblies 37 are preferably attached to the end wall portions 25, 27 and to the covers 35 for opening and closing of the covers 35. The hydraulic assemblies 37 are designed in such a manner that each cover 35 in an open state is parallel with and close to one lateral portion 23. The covers 35 are arranged in a roof-ridge formation. Each end wall portion 25, 27 therefore has an arrow-head-like upper edge against which the covers 35 abut.

The inventive platform is applicable to transportation of various materials, but is specifically designed for transportation of hot materials, such as asphalt.

In addition to the above-mentioned alternative embodiments, many other modifications of the platform are feasible within the scope of the invention, as defined in the appended claims.

With a view to exemplifying this, it may be mentioned that the frame, which in the embodiment shown is a simple rectangular frame, is replaceable by, for instance, a demountable frame for use of lorries adapted thereto; that many different plastic materials are usable for the outer wall 9; that the shape of the outer wall is fairly freely selectable; that the reflective layer is not necessary, but yields an increased degree of insulation; and that the strip-shaped edge portions 15 are not necessary, although they reinforce the main portion 11 and create a distance between the inner and outer walls 7, 9.

## Claims

1. A double-walled platform comprising a double-walled lower part (3) which is fillable with a load, a cover part (5) covering the lower part, and a supporting frame connected with the lower part, the lower part comprising an inner wall (7) and an outer wall (9) connected with the inner wall and the frame, stationary air being enclosed between the outer wall and the inner wall, **characterised** in that the inner wall comprises a channel-shaped curved main portion (11) and, connected therewith, front and rear end wall portions (25, 27), that supporting portions (34) of the frame are connected with the main portion and support the same, and that the outer wall comprises a plastic layer (17).

2. A double-walled platform as claimed in claim 1, **characterised** in that the outer wall further comprises a reflective layer (31), which forms its side facing the space.

3. A double-walled platform as claimed in claim 1 or 2, **characterised** in that the inner wall (7) comprises circumferentially extending reinforcing members (16) which are spaced apart in the longitudinal direction of the platform and attached to the side of the main portion (11) facing the space.

4. A double-walled platform as claimed in claim 1, 2 or 3, **characterised** in that the supporting portions (34) are longitudinal.

5. A double-walled platform as claimed in claim 4, **characterised** in that the outer wall (9) has a central bottom portion (19) arranged between the supporting portions (34) and connected therewith; vertical lateral portions (23) connected with the longitudinal lateral edges of the inner wall (7), and lateral bottom portions (21) connected with the lateral portions and the supporting portions.

6. A double-walled platform as claimed in any one of claims 1-5, **characterised** in that the inner wall (7) comprises edge portions (15) connected with the lateral edges of the main portion (11) and the end wall portions (25, 27), respectively.
